# EUROPEAN PATENT SPECIFICATION

(11) **EP 3 436 252 B1**
(45) Date of publication and mention of the grant of the patent: **29.04.2026**
(21) Application number: 16719963.7
(22) Date of filing: 28.03.2016
(51) Int. Cl.: B29C 70/34, B29C 70/46, B29C 70/54, B29D 99/00

(54) **ROTOR BLADE TIP MOLD ASSEMBLY INCLUDING SOLID CORE AND METHOD FOR FORMING ROTOR BLADE TIP**
ROTORBLATTSPITZENFORMANORDNUNG MIT VOLLKERN UND VERFAHREN ZUR HERSTELLUNG DER ROTORBLATTSPITZE
ENSEMBLE MOULE D'EXTRÉMITÉ DE PALE DE ROTOR COMPRENANT UN NOYAU SOLIDE ET PROCÉDÉ DE FORMATION D'EXTRÉMITÉ DE PALE DE ROTOR

(43) Date of publication of application: 06.02.2019
(73) Proprietor: GE VERNOVA RENOVABLES ESPAÑA, S.L., 08005 Barcelona (ES)
(72) Inventor: MERZHAEUSER, Thomas, 85748 Garching / BY (DE); FANG, Biao, Niskayuna, NY 12309 (US); NIERATSCHKER, Anja, Lena, 85748 Garching / BY (DE); DHUMAL, Swapnil, Yashwant, Bangalore KA 560066 (IN)
(74) Representative: Bardehle Pagenberg S.L.
(86) International application number: PCT/US2016/024445
(87) International publication number: WO 2017/171703

(56) References cited:
- EP-A1- 1 092 529
- EP-A1- 1 880 833
- EP-A1- 2 728 172
- EP-A1- 2 918 399
- GB-A- 2 456 566
- GB-A- 2 488 099
- US-A- 5 645 670
- US-A1- 2012 141 283

## Description

### BACKGROUND

The present disclosure relates in generally to rotor blades, and more specifically to methods and apparatus for forming rotor blade tips.

Wind power is considered one of the cleanest, most environmentally friendly energy sources presently available, and wind generators have gained increased attention in this regard. A modern wind generator typically includes wind turbine and a generator. The wind turbine typically includes a tower, gearbox, nacelle, and one or more rotor blades. The generator is typically housed in the nacelle. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid. Further, wind generators are typically grouped together in a wind farm, and may be onshore or offshore.

Rotor blades for use in wind turbines are typically formed in a plurality of separate components, which are then connected together to form the rotor blade. For example, typically known rotor blades are formed by joining multiple pre-fabricated parts, (e.g., root, mid-section, tip). These prefabricated parts are connected together, typically at the leading edge and the trailing edge by a glue, a bonding paste or other suitable bonding material, to form the rotor blade. During fabrication, the glue, the bonding paste or other suitable bonding material has to be applied along the length of the blade at the shear webs and at leading and trailing edges.

This current manufacturing process of assembling pre-manufactured parts has been used for many years to build blades up to approximately 60m in length. Future blades will be beyond this length and likewise produced in multiple parts. For example future blades may be produced to include a root part of 50+m and a tip part of 20+m, to simplify transportation and handling at the manufacture site. As this involves producing and joining various parts of greater lengths, known processes are not as robust and repeatable as required. Furthermore, known processes are not cost effective and require a long cycle time. Documents EP 1 880 833 and EP 2 918 399 are examples of methods for manufacturing rotor blades for wind turbines. Document EP 1 092 529 is an example of a caul for an autoclave process for a gas turbine blade preform. Document US 5645670 is an example of a method and apparatus for assembly bonding of an airfoil structure, such as a helicopter. Document GB 2456566 is an example of a manufacturing tool for forming a polymer matrix composite.

Accordingly, improved methods and apparatus for forming rotor blade parts are desired in the art. For example, improved methods and apparatus for forming rotor blades that allow a rotor blade to be formed in multiple parts, whereby the method of manufacture for each part is optimized, are desired. By forming the blade of multiple parts, this new blade architecture will allow for optimization using multiple manufacturing processes. More particularly, this new blade architecture will allow the use of a manufacture process for the blade root/mid-section and the use of a different manufacturing process for the blade tip, if desired, whereby each process is optimized for each independent size.

### BRIEF DESCRIPTION

In accordance with one exemplary embodiment, disclosed is a method for forming a rotor blade. The method for forming the rotor blade including providing a first shell substrate on a first mold; providing a generally profile shaped solid core on the first shell substrate, generally profile shaped solid core comprising a permanent portion; providing a second shell substrate on the generally solid core; providing a second mold on the second shell substrate, wherein a stiffness of the second mold is one of less than or greater than a stiffness of the first mold.

In accordance with another exemplary embodiment, disclosed is a rotor blade mold assembly for forming a rotor blade. The rotor blade mold assembly including a first shell substrate on a first mold; a generally profile shaped solid core on the first shell substrate, the generally profile shaped solid core comprising a permanent solid core; a second shell substrate on the generally solid core; and a second mold on the second shell substrate

In accordance with yet another exemplary embodiment, disclosed is a rotor blade mold assembly for forming a rotor blade comprising exterior surfaces defining a pressure side, a suction side, a leading edge, and a trailing edge. The rotor blade mold assembly including a first mold comprising an inner surface having an inner contour corresponding to an exterior surface of one of the pressure side or the suction side the rotor blade; a shell substrate disposed on the inner surface; a generally profile shaped solid core on the first shell substrate, the generally profile shaped solid core comprising a permanent solid core; a second shell substrate disposed on the generally solid core; and a second mold comprising an inner surface having an inner contour corresponding to the other of the pressure side or the suction side.

Other objects and advantages of the present disclosure will become apparent upon reading the following detailed description and the appended claims with reference to the accompanying drawings. These and other features and improvements of the present application will become apparent to one of ordinary skill in the art upon review of the following detailed description when taken in conjunction with the several drawings and the appended claims.

### DRAWINGS

The above and other features, aspects, and advantages of the present disclosure will become better understood when the following detailed description is read with reference to the accompanying drawings in which like characters represent like parts throughout the drawings, wherein:
FIG. 1 is a side view of a wind turbine, in accordance with one or more embodiments shown or described herein;
FIG. 2 is an isometric view of a rotor blade, in accordance with one or more embodiments shown or described herein;
FIG. 3 is a chord-wise cross-sectional view of a rotor blade tip mold assembly, in accordance with one or more embodiments shown or described herein;
FIG. 4 is a chord-wise cross-sectional view of a rotor blade tip mold assembly, in accordance with one or more embodiments shown or described herein;
FIG. 5 is a chord-wise cross-sectional view of a rotor blade tip mold assembly, in accordance with one or more embodiments shown or described herein;
FIG. 6 is a chord-wise cross-sectional view of a rotor blade tip mold assembly, in accordance with one or more embodiments shown or described herein;
FIG. 7 is a chord-wise cross-sectional view of a rotor blade tip, in accordance with one or more embodiments shown or described herein;
FIG. 8 is a partial isometric view of a rotor blade tip, in accordance with one or more embodiments shown or described herein;
FIG. 9 is a chord-wise cross-sectional view of a rotor blade tip, in accordance with one or more embodiments shown or described herein;
FIG. 10 is a span-wise cross-sectional view of an alternate rotor blade tip mold assembly, in accordance with one or more embodiments shown or described herein;
FIG. 11 is a chord-wise cross-sectional view of an alternate rotor blade tip mold assembly, in accordance with one or more embodiments shown or described herein;
FIG. 12 is a chord-wise cross-sectional view of an alternate rotor blade tip mold assembly, in accordance with one or more embodiments shown or described herein;
FIG. 13 is a chord-wise cross-sectional view of an alternate rotor blade tip mold assembly, in accordance with one or more embodiments shown or described herein;
FIG. 14 is a chord-wise cross-sectional view of an alternate rotor blade tip, in accordance with one or more embodiments shown or described herein;
FIG. 15 is a partial isometric view of FIG. 12 is a chord-wise cross-sectional view of an alternate rotor blade tip mold assembly, in accordance with one or more embodiments shown or described herein;
FIG. 16 is a chord-wise cross-sectional view of an alternate embodiment of a rotor blade tip mold assembly, in accordance with one or more embodiments shown or described herein;
FIG. 17 is a chord-wise cross-sectional view of an alternate embodiment of a rotor blade tip mold assembly, in accordance with one or more embodiments shown or described herein;
FIG. 18 is a chord-wise cross-sectional view of an alternate embodiment of a rotor blade tip mold assembly, in accordance with one or more embodiments shown or described herein;
FIG. 19 is a chord-wise cross-sectional view of an alternate embodiment of a rotor blade tip mold assembly, not according to the literal wording of the appended claims but in accordance with one or more embodiments shown or described herein;
FIG. 20 is a chord-wise cross-sectional view of an alternate embodiment of a rotor blade tip mold assembly, not according to the literal wording of the appended claims but in accordance with one or more embodiments shown or described herein; and
FIG. 21 is a chord-wise cross-sectional view of an alternate embodiment of a rotor blade tip, not according to the literal wording of the appended claims but in accordance with one or more embodiments shown or described herein.

### DETAILED DESCRIPTION

The present disclosure will be described in reference to turbine components of a wind turbine, used for power generation, thought it should be understood that the novel blade and method of fabrication disclosed herein can be employed with a variety of components including gas turbines used for power generation and propulsion. Embodiments of the disclosure will be described for the purposes of illustration only; however, it is to be understood that other objects and advantages of the present disclosure will be made apparent by the following description of the drawings according to the disclosure. While preferred embodiments are disclosed, they are not intended to be limiting. Each embodiment is provided by way of explanation of the disclosure, not limitation of the disclosure. Rather, the general principles set forth herein are considered to be merely illustrative of the scope of the present disclosure and it is to be further understood that numerous changes may be made without straying from the scope of the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

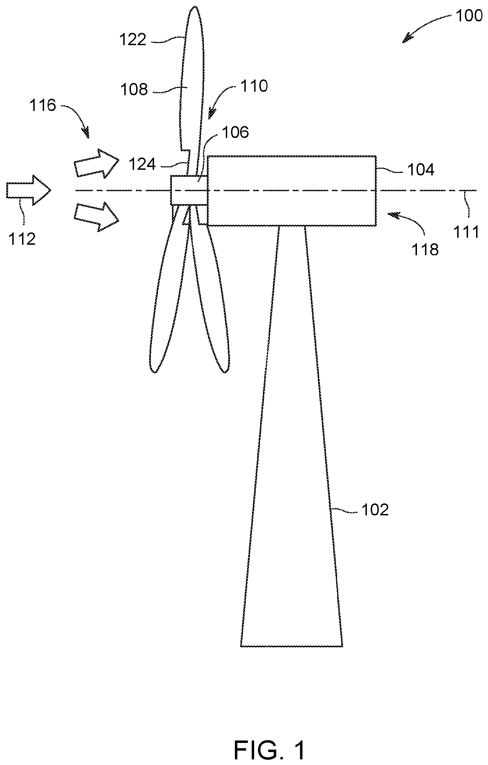

The view of FIG. 1 is provided for illustrative purposes only to place the present disclosure in an exemplary field of use. It should be appreciated that the disclosure is not limited to any particular type of wind turbine configuration.

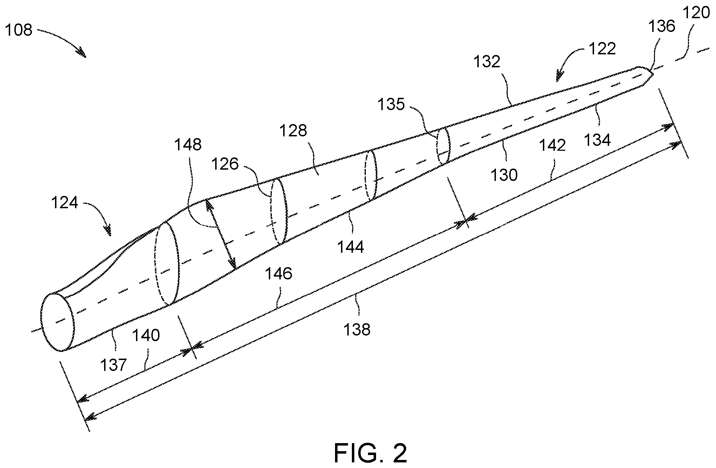

FIG. 1 illustrates a wind turbine 100. The wind turbine 100 includes a tower 102 onto which a nacelle 104 is arranged. The wind turbine power generation and control components are housed within the nacelle 104. More particularly, housed within the nacelle 104 is a generator (not shown) for producing electrical current. The generator is connected to a rotor hub 106 with a substantial horizontal main rotor shaft. A plurality of rotor blades 108 are mounted to the rotor hub 106, which is in turn connected to a main flange that turns the main rotor shaft. Each of the plurality of rotor blades 108 has an outer portion 122 and an inner portion 124. The terms "outer" and "inner" are used with respect to the hub 106. Therefore, the outer portion 122 of each of the plurality of rotor blades 108 is radially outside of the inner portion 124 in FIG. 2. The inner portion 124 of each of the plurality of rotor blades 108 is connected to the hub 106. The rotor blades 108 are configured to rotate about an axis (horizontal or vertical) at a rate determined by the wind speed and the shape of the rotor blades 108. Typically the plurality of rotor blades 108 includes two or more rotor blades. The rotor blades 108 and the hub 106 form a rotor 110 of the wind turbine 100. In operation the incoming wind, indicated by arrows 112, imparts a rotation on the rotor 110 due to an aerodynamic profile on the rotor blades 108. More specifically, in the illustrated embodiment, the rotor 110 turns around a substantially horizontal rotor axis 114, which is substantially parallel to the direction of the incoming wind 112. The rotor 110 drives the generator, such that electrical energy is produced from the kinetic energy of the wind 112.

It should be noted that relative adjectives like in front, backward, behind and rear are defined with respect to the wind direction 112 related to a wind turbine 100 in operation, i.e. when the wind turbine 100 produces electrical energy. That means that the wind 112 flows from a front end 116 to a back end 118 of the wind turbine 100. In addition, the terms axial or radial relate to the rotor axis 114 of the hub 106, when the wind turbine 100 produces electrical energy. Thus, as described above, the rotor axis 114 is substantially parallel to the wind 112 direction. The view of FIG. 1 is provided for illustrative purposes only to place the present disclosure in an exemplary field of use. It should be appreciated that the disclosure is not limited to any particular type of wind turbine configuration.

Referring again to the drawings wherein, identical reference numerals denote the same elements throughout the various views, FIG. 2 depicts in a simplified schematic drawing, a wind turbine blade 108 according to an embodiment, generally similar to the embodiment of FIG. 1. For the sake of simplicity, only a single rotor blade of the plurality of rotor blades 108 is shown in FIG. 2. In an embodiment, the inner portion 124 of each of the plurality of rotor blades 108 has a substantially circular cross-section, as best illustrated in FIG. 2, for structural purposes. Each rotor blade 108 may be, in a typical embodiment, turned around its longitudinal axis 120 to adjust a pitch angle. For that purpose a pitch mechanism is located in the hub 106 and/or the nacelle 104 of the wind turbine 100 (FIG. 1). The outer portion 122 of each of the rotor blades 108 has a wing shaped profile, such that the outer portion may also be called profiled section or profiled outer portion 122 of the rotor blade 108. The front end of each of the plurality of rotor blades 108 is typically straight from the connection to the hub 106 to the outer portion 122; in another typical embodiment of the present disclosure the front end of each of the plurality of rotor blades 108 is typically straight to a blade tip (described presently) of each of the rotor blades 108.

Referring still to FIG. 2, the rotor blade 108 according to the present disclosure may include exterior surfaces defining a pressure side 126 and a suction side 128 extending between a leading edge 130 and a trailing edge 132, and may extend from a blade tip 134 to a blade root 137. The exterior surfaces may be generally aerodynamic surfaces having generally aerodynamic contours, as is generally known in the art.

In some embodiments, the rotor blade 108 may include a plurality of individual blade segments aligned in an end-to-end order extending along a span 138 from the blade tip 134 to the blade root 137. In the illustrated embodiment of FIG. 2, the blade root 137 extends a length 140 of the span 138. The blade tip 134 extends along a length 142 of the span 138, extending from a tip joint 135 to a tip end 136. A mid-section 144 of the blade 108 extends a length 146 of the span 138 between the blade root 60m in length. It should be understood that although three segments are described for the rotor blade 108, a rotor blade comprised of a fewer or greater number of parts is anticipated. As previously alluded to, current manufacturing processes, including the assembling of pre-manufactured parts, has been used to build blades up to approximately 60m in length. It is anticipated that future blades will be beyond this length and produced in multiple parts, such as the length 140 of the blade root 137 and the length 146 of the blade mid-section 144 in combination extending 50± m and the length 142 of the blade tip 134 extending 20± m, to simplify transportation and handling at manufacture site. In the illustrated embodiment, the blade tip 134 may have a length 142 extending approximately 30-40% of the span 138.

Each of the individual blade segments may be uniquely configured so that the plurality of blade segments define a complete rotor blade 108 having a designed aerodynamic profile, length, and other desired characteristics. For example, each of the blade segments may have an aerodynamic profile that corresponds to the aerodynamic profile of adjacent blade segments. Thus, the aerodynamic profiles of the blade segments may form a continuous aerodynamic profile of the rotor blade 108 along the overall span 138.

The rotor blade 108 may, in exemplary embodiments, be curved. Curving of the rotor blade 108 may entail bending the rotor blade 108 in a generally flapwise direction and/or in a generally edgewise direction. The flapwise direction may generally be construed as the direction (or the opposite direction) in which the aerodynamic lift acts on the rotor blade 108. The edgewise direction is generally perpendicular to the flapwise direction. Flapwise curvature of the rotor blade 108 is also known as pre-bend, while edgewise curvature is also known as sweep. Thus, a curved rotor blade 108 may be pre-bent and/or swept. Curving may enable the rotor blade 108 to better withstand flapwise and edgewise loads during operation of the wind turbine 100, and may further provide clearance for the rotor blade 108 from the tower 102 during operation of the wind turbine 100.

The rotor blade 108 may further define a chord 148. As shown, the chord may vary throughout the span 138 of the rotor blade 108. Thus, a local chord may be defined for the rotor blade 108 at any point on the rotor blade 108 along the span 138.

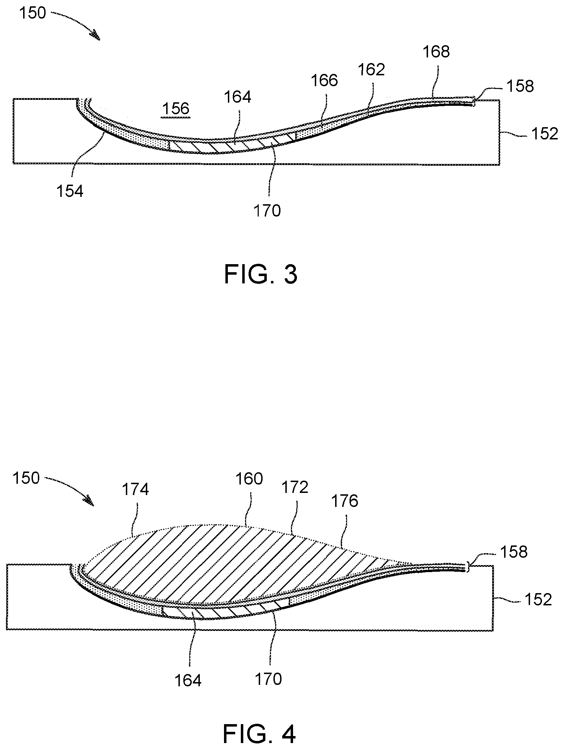

As shown in FIGS. 3-6, 10-13, and 16-20 the present disclosure is further directed to rotor blade mold assemblies and methods for forming rotor blades 108. A rotor blade mold assembly according to the present disclosure includes a mold and a plurality of layers and components disposed therebetween which may form a portion of the rotor blade 108, and more particularly the blade tip 134 (FIG. 2). The rotor blade mold assemblies and methods may advantageously allow for the blade tip 134 of the rotor blades 108 to be optimized for each independent size. Furthermore, the rotor blade mold assemblies and methods may advantageously allow for the blade tip 132 of the rotor blades 108 to be formed therefrom without bonding steps. This leads to a cost effective process with reduced mold cycle time and labor time that in turn may significantly decrease variation and provide higher performance of the product. In addition, this new blade architecture will allow for different manufacturing processes to be utilized for the blade segments, such as the blade root 137, blade mid-section 144 and the blade tip 134, whereby each process may be optimized for each independent size. In an embodiment, the rotor blade mold assemblies disclosed herein provide for manufacture of a blade tip 134 approximately 20m in length.

Referring more specifically to FIGs. 3 through 8, illustrated is a first embodiment of a rotor blade mold assembly 150 and a blade tip 151, generally similar to blade tip 134 of FIG. 2, manufactured using the rotor blade mold assembly 150, in accordance with the present disclosure. The rotor blade mold assembly 150 includes a first mold 152. The first mold 152 has an inner surface 154 that has an inner contour corresponding to the exterior surfaces of the rotor blade tip 151. Thus, for example, the first mold 152 may have an inner surface 154 with an inner contour corresponding to one of the pressure side 126 or the suction side 128 (FIG. 2). In the embodiment of FIGs. 3 through 8, the first mold 152 may meet with a second mold (described presently) when assembled to further form the leading edge 130 and trailing edge 132 (FIG. 2), and the inner surface 154, may thus further correspond to the necessary portions of the leading edge 130 and trailing edge 132. Alternatively, the inner surface 154 may correspond to any suitable portions of the exterior surfaces of the rotor blade 108 to be formed. For example, the inner surface 154 may correspond to the leading edge 130 and portions of the pressure side 126 and suction side 128, and the inner surface 154 may further correspond to the trailing edge 132 and portions of the pressure side 126 and suction side 128. Still further, in alternative embodiments, more than a single mold may be utilized. The inner surfaces of these molds may correspond to any suitable portions of the exterior surfaces of the rotor blade tip 151 to be formed, such that the molds when assembled together have an overall interior surface 154 with an overall contour that corresponds to the overall exterior surfaces of the rotor blade tip 151.

It should additionally be understood that, in exemplary embodiments, the mold may extend in the span-wise direction from the tip joint 135 to the tip end 136 (FIG. 2) of the rotor blade 108 to be formed, and the interior surfaces 154 may have contours that correspond to the tip joint 135, etc., as necessary such that the complete blade tip 151 can be joined to the remaining portion of the rotor blade 108, and in particular the mid-section 144, to form the complete rotor blade 108. Alternatively, however, the molds may form only a portion of the blade tip 151 in the span-wise direction.

Various materials may be provided in the mold, such as in an interior 156 of the first mold 152 defined by the interior surface 154 thereof, to form a rotor blade tip 151 therein. For example, a first shell substrate 158 may be provided on the inner surface 154 of the first mold 152, and a generally profile shaped solid core 160 may be disposed within the first shell substrate, as illustrated in FIG. 4 and described presently. It should be understood that each of these materials may be provided as a singular component in the span-wise direction along the entire span 142 of the rotor blade tip 151, or may be provided in multiple separate components along the entire span 142 of the rotor blade tip 151, or may be provided through only a portion of the span 142 of the rotor blade tip 151.

For example, a first shell substrate 158 may be provided in the first mold 152. The first shell substrate 158 may include various materials that may form the rotor blade tip 151, such as the shell thereof. In an exemplary embodiment, for example, and as best illustrated in FIG. 3, the first shell substrate 158 may include one or more first outer skin layers 162, which may be provided on for example the first mold 152. The first shell substrate 158 may further include one or more first structural members 164, which may be provided on the first outer skin layers 162. The first shell substrate 158 may further include one or more first body layers 166, which may additionally be provided on the first outer skin layers 162. The first shell substrate 158 may still further include one or more first inner skin layers 168, which may be provided on the first structural members 164 and the first body layers 166.

The first outer and inner skin layers 162, 168 may be formed from any suitable material, which may serve as a skin of the rotor blade tip 151 to be formed. In an embodiment, the first shell substrate 158 is formed of prepreg materials. In an alternate embodiment, the first shell substrate 158 is formed of dry materials. Suitable composite materials, such as in exemplary embodiments biaxial materials, are particularly suitable for use as first outer and inner skin layers 162, 168. The composite materials may be formed from, for example, suitable polymers, such as thermoplastics or thermosets, with biaxial fibers embedded therein. Suitable polymers include, for instance, polyolefins (e.g., polypropylene, propylene-ethylene copolymers, etc.), polyesters (e.g., polybutylene terephalate ("PBT")), polycarbonates, polyamides (e.g., Nylon.TM.), polyether ketones (e.g., polyetherether ketone ("PEEK")), polyetherimides, polyarylene ketones (e.g., polyphenylene diketone ("PPDK")), liquid crystal polymers, polyarylene sulfides (e.g., polyphenylene sulfide ("PPS"), poly(biphenylene sulfide ketone), poly(phenylene sulfide diketone), poly(biphenylene sulfide), etc.), fluoropolymers (e.g., polytetrafluoroethylene-perfluoromethylvinyl ether polymer, perfluoro-alkoxyalkane polymer, petrafluoroethylene polymer, ethylene-tetrafluoroethylene polymer, etc.), polyacetals, polyurethanes, polycarbonates, styrenic polymers (e.g., acrylonitrile butadiene styrene ("ABS")), and so forth. Suitable fiber materials include, for example, metal fibers, glass fibers (e.g., E-glass, A-glass, C-glass, D-glass, AR-glass, R-glass, S1-glass, S2-glass, etc.), carbon fibers (e.g., amorphous carbon, graphitic carbon, or metal-coated carbon, etc.), boron fibers, ceramic fibers (e.g., alumina or silica), aramid fibers (e.g., Kevlar.RTM. marketed by E. I. duPont de Nemours, Wilmington, Del.), synthetic organic fibers (e.g., polyamide, polyethylene, paraphenylene, terephthalamide, polyethylene terephthalate and polyphenylene sulfide), and various other suitable natural or synthetic inorganic or organic fibrous materials.

The first body layers 166 may be formed from any suitable material, which may serve to provide aid the overall structural integrity to the shell of the rotor blade tip 151. For example, in some embodiments, a first body layer 166 may be formed from a balsa material, such as balsa wood; a polyvinyl chloride ("PVC") material; or a polyurethane ("PU" material). In exemplary embodiments, the body layer 162 may be foam, which may be formed from any suitable material.

The first structural members 164 may be formed from any suitable material, which may serve to reinforce the rotor blade tip 151. In an exemplary embodiment, the first structural member 164 may be formed from a suitable composite material, as discussed above. Further, generally unidirectional composite materials are particularly suitable for applications in first structural member 164. The direction of the unidirectional fibers of a unidirectional composite material may in exemplary embodiments be in the span-wise direction.

In the embodiment of FIGs. 3 through 8, the first structural member 164 according to the present disclosure may include, for example, one or more spar caps. In the embodiments as shown in FIGS. 3 through 8, a first structural member 164 includes an integral spar cap 170. As mentioned above, it should additionally be understood that a structural member 164 may extend in the span-wise direction throughout the entire span 142 of the blade tip 151 as a single unitary member, or may be provided in separate components along the entire span 142 of the blade tip 151, or may be provided in only a portion of the span 142 of the blade tip 151.

The first body layers 166 may be provided on the first outer skin layers 162 alongside the first structural members 164, on the portions of the first outer skin layers 162 not covered by the first structural members 164. Thus, FIGS. 3 through 8 illustrate one exemplary embodiment in which the first structural member 164 comprising an integral spar cap 170 is situated within the multiple layers of the first shell structure 158.

It should be understood that a first shell substrate 158 according to the present disclosure is not limited to the various components thereof as discussed above, and rather that any suitable first shell substrate 158 is within the scope and spirit of the present disclosure.

After the first shell substrate 158 is provided on the first mold 152, the one or more generally profile shaped solid cores 160 may be provided on the first shell substrate 158. The generally profile shaped solid core 160 defines the interior of the rotor blade tip 151. For example, in exemplary embodiment as shown in FIGs. 4 through 8, a one-piece solid core 172 extending in a chord-wise direction from the leading edge 130 to the trailing edge 132 is provided. As previously asserted, while a plurality of solid cores 160 may be utilized along the span 142 to form the blade tip 151, in the embodiment of FIGs. 3 through 8, each of the plurality of solid cores 160 is formed as a single, one-piece solid core 172 along the chord 148 (FIG. 2) of the blade tip 151. The one-piece solid core 172 may define a nose portion 174 interior adjacent the leading edge 130 of the blade tip 151 and a tail portion 176 interior adjacent the trailing edge 132 of the blade tip 151. As previously indicated, it should be understood that the generally profile shaped solid core 160 may extend in the span-wise direction throughout the entire span 142 as a single unitary member, or may be provided in separate components along the entire span 142, or may be provided in only a portion of the span 142 of the blade tip 151. The generally profile shaped solid core 160 according to the present disclosure is defined as a permanent portion of the blade tip 151 and is not removed upon complete formation of the blade tip 151.

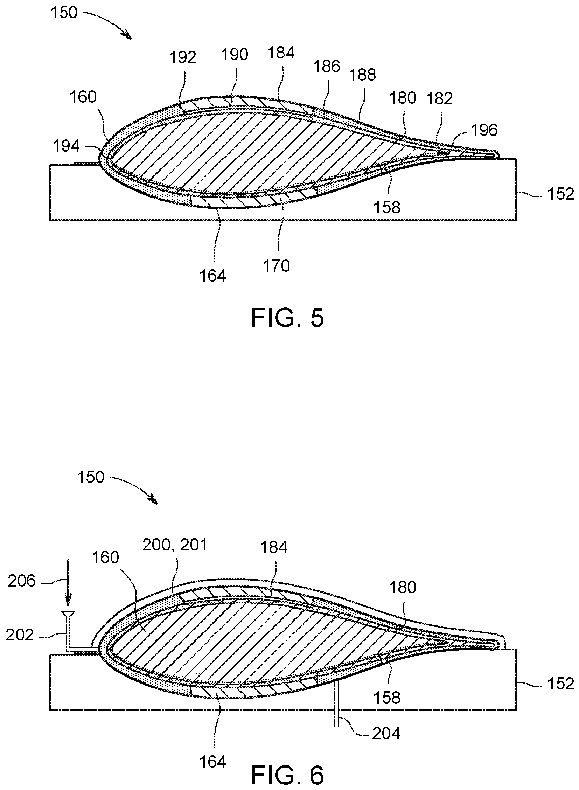

After the generally profile shaped solid core 160 is provided on the first shell substrate 158, a second shell substrate 180 may be provided on the generally profile shaped solid core 160, as is shown in FIG. 5. In an embodiment, the second shell substrate 180 may include one or more second inner skin layers 182, which may be provided on the generally profile shaped solid core 160. The second shell substrate 180 may further include one or more second structural members 184, which may be provided on the second inner skin layers 182. The second shell substrate 180 may further include one or more second body layers 186, which may additionally be provided on the second inner skin layers 182. The second shell substrate 180 may still further include one or more second outer skin layers 188, which may be provided on the second structural members 184 and second body layers 186.

The second inner and outer skin layers 182, 188 may be formed from any suitable material, which may serve as a skin of the rotor blade tip 151 to be formed, and as discussed above with respect to the first outer and inner skin layers 162, 168. In an embodiment, the second shell substrate 180 is formed of prepreg materials. In an alternate embodiment, the second shell substrate 180 is formed of dry materials. Further, in exemplary embodiments, as shown in FIG. 5, the second inner skin layer 182 may be integral with the first inner skin layer 168 and/or the second outer skin layer 188 may be integral with a first outer skin layer 162. Thus, these integral skin layers may be formed as singular components. When the first skin layers 162 and/or 168 are provided in the rotor blade mold assembly 150, the associated integral second skin layers 188 and/or 182 may additionally be provided, and may for example initially extend out of, for example, the first mold 152. After the generally profile shaped solid cores 160 are provided, the associated integral second skin layers 182 and/or 188 may then be provided by wrapping these skin layers over the generally profile shaped solid cores 160, such that when provided, an integral inner skin layer 168, 182 generally surrounds the generally profile shaped solid cores 160 and/or an integral outer skin layer 162, 188 generally surrounds the inner skin layers 168, 182 and the generally profile shaped solid cores 160. It should be understood, however, that in alternative embodiments, the inner skin layers 168, 182 and/or outer skin layers 162, 188, may be separate components.

The second body layers 186 may be formed from any suitable material, which may serve to provide an overall structural integrity to the shell of the rotor blade tip 151, as discussed above with respect to the first body layers 166. The second structural members 184 may be formed from any suitable material, which may serve to reinforce the rotor blade tip 151, as discussed above with respect to the first structural members 164.

The second structural member 184 according to the present disclosure may include, for example, one or more spar caps 190, as discussed above with respect to the first structural members 164. In the embodiments as shown in FIGs. 5 through 8, a second structural member 184 includes a spar cap 190.

The second body layers 186 may be provided on the second inner skin layers 182 alongside the second structural members 184, on the portions of the second inner skin layers 182 not covered by the second structural members 184. Thus, FIG. 5 illustrates one exemplary embodiment in which a structural member 184 comprising a spar cap 190 is situated between two second body layers 186.

In some embodiments, the second shell substrate 180 may further include one or more mat layers 192. The mat layers 192 may be provided, for example, on the second inner skin layers 182 before the second structural members 184 are provided thereon. The mat layer 192 need not cover the entire inner skin layer 182, but rather may in some embodiments cover only the portion on which the second structural members 184 may be disposed, as best illustrated in FIG. 5. The mat layer 192 may be formed from any suitable material that facilitates bonding of the structural members 184 with the inner skin layer 182. For example, in an exemplary embodiment, the mat layer 192 may be formed from a composite material, and commonly referred to as a continuous filament mat (CFM). A continuous filament mat generally includes filaments/fibers that have lengths that are generally limited only by the length of the part, such as the mat 192 in these applications. Suitable composite materials are discussed above with respect to the various skin layers. In an embodiment, the one or more mat layers 192 may provide resin flow pattern control, acting as a flow promotor (described presently).

It should be understood that a second shell substrate 180 according to the present disclosure is not limited to the various components thereof as discussed above, and rather that any suitable second shell substrate 180 is within the scope and spirit of the present disclosure.

In an embodiment, and as best illustrated in FIG. 5, one or more bonding caps may additionally be provided. For example, as shown, a leading edge bonding caps 194 and trailing edge bonding caps 196 may be provided. In exemplary embodiments, the bonding caps 194, 196 may be provided before the generally profiled shaped solid core 160 is provided, and/or after the first shell substrate 158, such as the first inner skin layer 168 thereof, are provided. Each bonding cap 194, 196 may be formed from any suitable material, which in exemplary embodiments is a composite material. Leading edge bonding caps 194 are in exemplary embodiments formed from a unidirectional or biaxial material, while trailing edge bonding caps 196 are in exemplary embodiments formed from a unidirectional material, as discussed above.

After the second shell substrate 180 is provided on the generally profiled shaped solid cores 160, a second mold 200, may be provided on the second shell substrate 180, as best illustrated in FIG. 6. The second mold 200 having a stiffness of one of less than or greater than a stiffness of the first mold 152. In an embodiment, the mold supporting the suction side 128 of the complete rotor 110 has a stiffness greater than the mold supporting the pressure side 126 of the complete rotor 110, due to higher quality requirements on the shape at the suction side 128 and thereby enabling customization during the layup of the pressure side 126. As used herein, the term "stiffness" is intended as a measure of the amount of deflection that a load causes in a material or the resistance of an elastic body to deflection or deformation by an applied force. Accordingly, herein, the first mold 152 is comprised of a material having a higher Young's modulus than the materials comprising the second mold 200. In the illustrated embodiment, the second mold 200 is a caul plate 201. The caul plate 201 may generally enclose the blade tip substrates 158, 180, such that the rotor blade tip 151 (or any span-wise portion thereof) can be formed within the mold assembly 150. Further, a plurality of inlet ports 202 and outlet ports 204 may be defined in and/or between the first mold 152 and the caul plate 201, to allow a suitable resin to be provided between the first mold 152 and the caul plate 201 to form the rotor blade tip 151. In an embodiment utilizing prepreg materials, the inclusion of resin ports is not required.

After enclosing the rotor blade substrates 158, 180 and other components, such as the generally profiled shaped solid cores 160, between the first mold 152 and the caul plate 201, a resin 206 may be flowed into the mold assembly 150 to bond with the substrates 158, 180, such as with the various components thereof, and with the generally profiled shaped solid cores 160, to form the rotor blade tips 151. The resin 206 may in general be a polymer material, such as a suitable thermoplastic or thermoset material as discussed above. Additionally, in an exemplary embodiment, a vacuum may be applied to the mold assembly 150 before the resin 206 is flowed therein, to facilitate the flow of resin 206 and the bonding thereof with the various rotor blade tip 151 components. The vacuum may continue to be applied during flowing of the resin 206 therein to facilitate such flow. One or more vacuum suction levels may be utilized as desired or required to obtain a desired flow of resin 206. After flowing of the resin 206 into the mold, the resin 206 is allowed to cure.

In an alternative embodiment, where a prepreg material is used to form the first shell substrate 158 and the second shell substrate 180, and a resin flow is not required, and the material is simply allowed to cure.

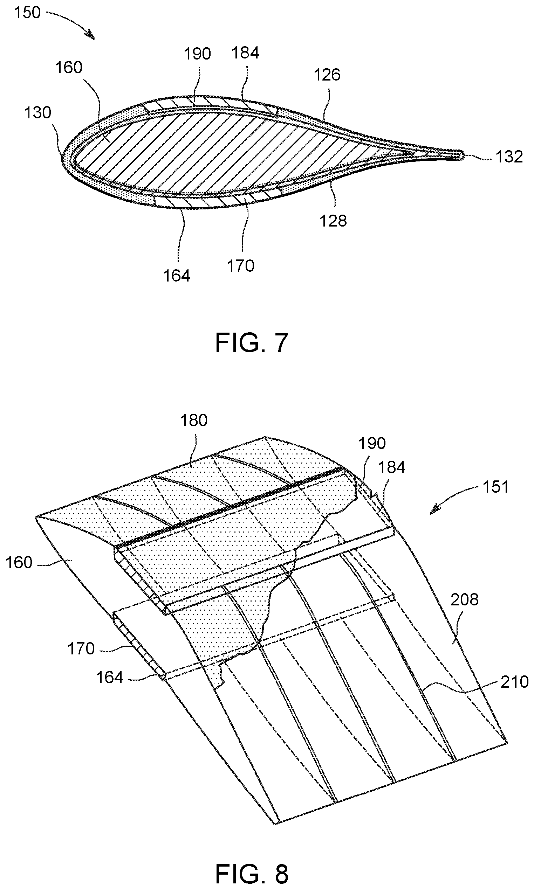

Once cured, the first mold 152, the caul plate 201 and the ports 202, 204 (if included) are removed to provide the complete blade tip 151 as best illustrated in a chord-wise cross-sectional view in FIG. 7 and in an isometric view FIG. 8, in which only a portion of the blade tip 151 is illustrated, having a portion of the second shell substrate 180 removed for illustrative purposes.

In an embodiment, the blade tip 151 may include resin flow promotors in the form of shaped flow promotors, or flow promoting shell materials to account for the tapered shape of the blade tip 151 and ensure an even fill of resin 260 in the materials forming the first shell substrate 158 and the second shell substrate 180. As best illustrated in FIG. 8, in an embodiment, an exterior surface 208 of the generally profiled shaped solid core 160 may include one or more shaped flow promotors, and more specifically, one or more chord-wise oriented grooves 210 formed therein to increase the resin flow length and promote an even flow of the resin 206 between the leading edge 130 and trailing edge 132 of the blade tip 151. The grooves 210 may further adjust the resin flow speed to account for variations in chord length. In an embodiment, the grooves 210 may be formed during the fabrication/shaping of the generally profiled shaped solid core 160, or alternatively by a cutting or milling tool, such as a saw blade, or similar. The maximum size of a groove 210 pattern may depend on the quality of the vacuum. In an embodiment, the grooves 210 may be approximately 40mm and have a groove cut width of less than 1.5mm to avoid wrinkles in the overlying first and/or second shell substrates 158, 180.

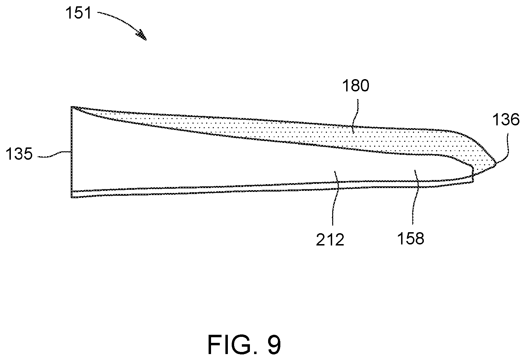

Alternatively, as best illustrated in FIG. 9, the flow of the resin 206 may be steered by adding flow promoting shell materials, in the form of resin distribution media 212 into the layup of the first shell substrate 158 and/or the second shell substrate 180. In an embodiment, the resin distribution media 212 may be in the form of mat layers 192, as previously described. In an embodiment, the flow promoters, and more particularly the resin distribution media 212 may include materials that enable the formation of a structural composite to lower the permeability of the resin 206 in the first shell substrate 158 and/or the second shell substrate 180.

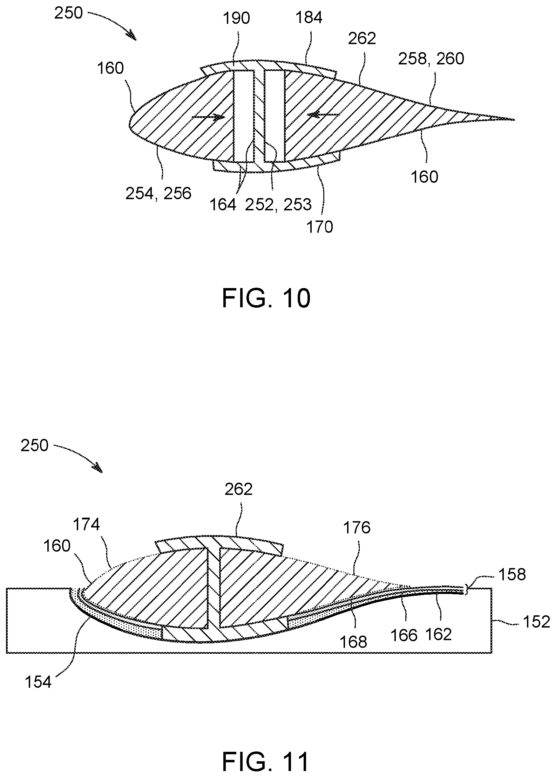

Referring now to FIGs. 10 through 15, illustrated is a second embodiment of a rotor blade mold assembly 250 and a blade tip 251, generally similar to blade tip 134 of FIG. 2, manufactured using the rotor blade mold assembly 250, in accordance with the present disclosure. It should be understood that like elements have like numbers throughout the disclosed embodiments. Accordingly, similar to the previous embodiment, the rotor blade mold assembly 250 includes a generally profiled shaped solid core 160 that in this particular embodiment, is formed in multiple pieces, and assembled relative to a structural member (described presently) prior to disposing within the mold (described presently). More particularly, as best illustrated in FIG. 10, initially in the blade tip manufacturing process of this embodiment, a plurality of structural members are provided, and more particularly, one or more first structural members 164 and a second structural member 184. In this particular embodiment, the one or more first structural members 164 may include one or more spar caps 170 and structural beams 252. The structural beams 252 are described herein may include shear webs, box beams, I-beams, or the like. In the embodiment as shown in FIGs. 10 through 15, the one or more first structural members 164 include an integral spar cap 170 and a shear web 253. Alternatively, the spar cap 170 and shear web 253 may, for example, be formed as separate structural members 164. The second structural member 184 according to the present disclosure may include, for example, one or more spar caps 190, as previously described. In the embodiment shown in FIG. 10, the second structural member 184 includes a spar cap 190.

As mentioned above, it should additionally be understood that the structural members 164, 184 may extend in the span-wise direction throughout the entire span 142 (FIG. 2) of the blade tip 251, as a single unitary member, or may be provided in separate components along the entire span 142 of the blade tip 251, or may be provided in only a portion of the span 142 of the blade tip 251. The structural members 164, 184 may be formed from any suitable material, such as those previously described, which may serve to reinforce the rotor blade tip 251.

During the initial steps of manufacture, as best illustrated in FIG. 10, the one or more generally profiled shaped solid cores 160, and more particularly, one or more first solid core portions 254 and one or more second solid core portions 256 are positioned relative to the structural members 164, 184 so as to form one or more solid core structural member assemblies 262. In the illustrated embodiment, the one or more first solid core portions 254 define one or more solid nose cores 256, interior adjacent the leading edge 130 of the blade tip 251. The one or more second solid core portions 258 define one or more solid tail cores 260, interior adjacent the trailing edge 132 of the blade tip 251. As previously indicated, it should be understood that each of the generally profile shaped solid cores 160 may extend in the span-wise direction throughout the entire span 142 as a single unitary member, or may be provided in separate components along the entire span 142, or may be provided in only a portion of the span 142 of the blade tip 251. The generally profile shaped solid core 160 according to the present disclosure is defined as a permanent portion of the blade tip 251 and is not removed upon complete formation of the blade tip 251.

Referring now to FIG. 11, the rotor blade assembly 250 further includes a first mold 152. The first mold 152 has an inner surface 154 that has an inner contour corresponding to the exterior surfaces of the rotor blade tip 251. Thus, for example, the first mold 152 the inner surface 154 may have an inner contour corresponding to one of the pressure side 126 or the suction side 128 (FIG. 2). In the embodiment of FIGs. 10 through 15, the first mold 152 may meet with a second mold, such as a caul plate (described presently) when assembled to further form the leading edge 130 and trailing edge 132 (FIG. 2), and the inner surface 154, may thus further correspond to the necessary portions of the leading edge 130 and trailing edge 132. Alternatively, the inner surface 154 may correspond to any suitable portions of the exterior surfaces of the rotor blade 108 to be formed. For example, similar to the previously described embodiment, the inner surface 154 may correspond to portions of the leading edge 130, the trailing edge 132 and portions of the suction side 128, or the inner surface 154 may correspond to portions of the leading edge 130, the trailing edge 132 and portions of the pressure side 126. Still further, in alternative embodiments, more than a single mold may be utilized. The inner surfaces of these molds may correspond to any suitable portions of the exterior surfaces of the rotor blade tip 251 to be formed, such that the molds when assembled together have an overall interior surface 154 with an overall contour that corresponds to the overall exterior surfaces of the rotor blade tip 251.

As previously described, the first mold 152 may extend in the span-wise direction from the tip joint 135 to the tip end 136 (FIG. 2) of the rotor blade 108 to be formed, and the interior surfaces 154 may have contours that correspond to the tip joint 135, etc., as necessary such that the complete blade tip 251 can be joined to the remaining portion of the rotor blade 108, an in particular the mid-section 144, to form the complete rotor blade 108. Alternatively, however, the molds may form only a portion of the blade tip 251 in the span-wise direction.

Various materials may be provided in the molds, such as those previously described with respect to FIGs. 3 through 8, to form the rotor blade tip 251 therein, including prepreg materials or dry fiber materials. For example, a first shell substrate 158 may be provided on the inner surface 154 of the first mold 152, and the one or more solid core/structural member assemblies 262 may be disposed within the first shell substrate, as illustrated in FIG. 11. As previously described, the first shell substrate 158 may include one or more first outer skin layers 162, one or more first body layers 166, and one or more first inner skin layers 168. Similar to the previous embodiment, it should be understood that each of these materials may be provided as a singular component in the span-wise direction along the entire span 142 of the rotor blade tip 251, or may be provided in multiple separate components along the entire span 142 of the rotor blade tip 251, or may be provided through only a portion of the span 142 of the rotor blade tip 251. The one or more first outer skin layers 162, one or more first body layers 166, and one or more first inner skin layers 168 may be formed from any suitable material, such as those previously described.

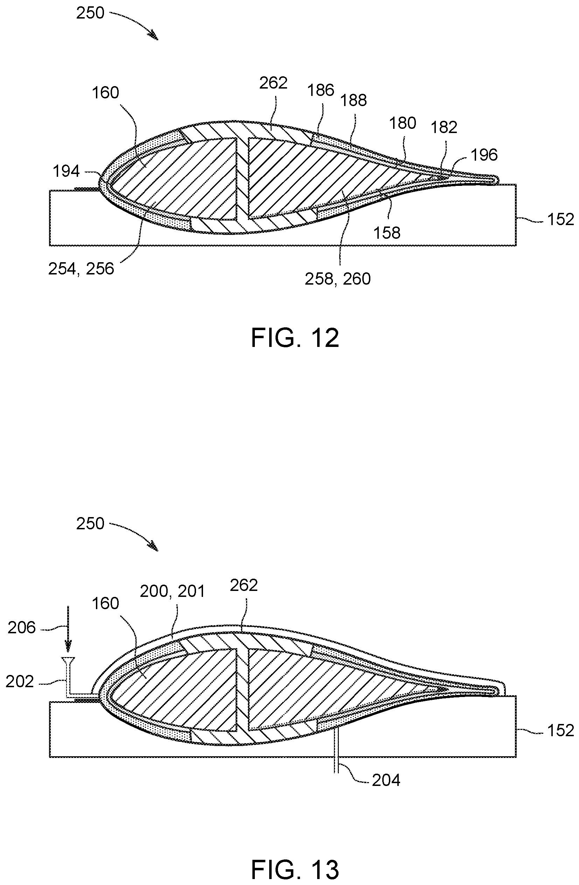

The one or more solid core/structural member assemblies 262 may be provided on the first shell substrate 15, or alternatively formed integral therewith the first shell substrate 158. Next, a second shell substrate 180 may be provided on the one or more solid core/structural member assemblies 262, as is shown in FIG. 12. In an embodiment, the second shell substrate 180 may include one or more second inner skin layers 182, one or more second body layers 186, and one or more second outer skin layers 188, as previously described. Similar to the previous embodiment, it should be understood that each of these materials may be provide as a singular component in the span-wise direction along the entire span 142 (FIG. 2) of the rotor blade tip 251 or may be provided in multiple separate components along the entire span 142 of the rotor blade tip 251, or may be provided through only a portion of the span 142 of the rotor blade tip 251. The one or more second inner skin layers 182, one or more second body layers 186, and one or more second outer skin layers 188 may be formed from any suitable material, such as those previously described.

It should be understood that the first and second shell substrates 158, 180 according to the present disclosure are not limited to the various components thereof as discussed above, and rather that any suitable first and second shell substrates 158, 180 are within the scope and spirit of the present disclosure. In an embodiment, the first shell and second shell substrate 158, 180 are formed of prepreg materials. In an embodiment, the first shell and second shell substrate 158, 180 are formed of dry fiber materials, undergoing resin infusion in a later step.

Similar to the previous embodiment, in an embodiment, as best illustrated in FIG. 12, one or more bonding caps may additionally be provided. For example, as shown, a leading edge bonding caps 194 and trailing edge bonding caps 196 may be provided.

After the second shell substrate 180 is provided on the one or more solid core/structural member assemblies 262, the second mold 200, such as a caul plate 201, may be provided on the second shell substrate 180, as best illustrated in FIG. 13. The caul plate 201 may generally enclose the blade tip substrates 158, 180, such that the rotor blade tip 251 (or any span-wise portion thereof) can be formed within the mold assembly 250. Further, a plurality of inlet ports 202 and outlet ports 204 may be defined in and/or between the first mold 152 and the caul plate 201, to allow a suitable resin to be provided between in the first mold 152 and the caul plate 201 to form the rotor blade tip 251.

Similar to the previous embodiment, after enclosing the rotor blade substrates 158, 180 and other components, such as the generally profiled shaped solid cores 160, between the first mold 152 and the caul plate 201, a resin 206 may be flowed into the mold assembly 250 to bond with the substrates 158, 180, such as with the various components thereof, and with the generally profiled shaped solid cores 160, to form the rotor blade tips 252. In an exemplary embodiment, a vacuum may be applied to the mold assembly 250 before the resin 206 is flowed therein, to facilitate the flow of resin 206 and the bonding thereof with the various rotor blade tip 251 components. In an alternate embodiment utilizing prepreg materials, the rotor blade substrates 158, 180 and other components are simply allowed to cure.

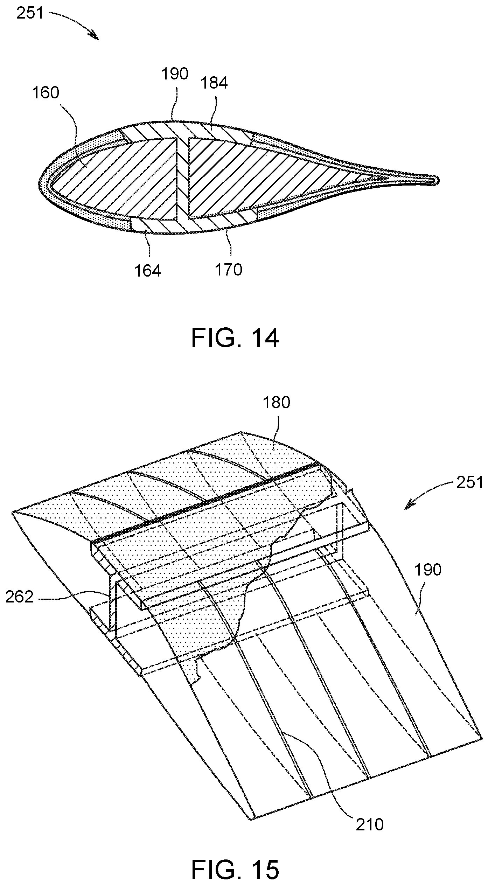

After flowing of the resin 206 into the mold assembly 250, the resin 206 is allowed to cure. Once cured, the mold 252, the caul plate 201 and the ports 202, 204 are removed to provide the complete blade tip 251, as best illustrated in a chord-wise cross-sectional view in FIG. 14 and in an isometric view in FIG. 15, in which only a portion of the blade tip 251 is illustrated in FIG. 15, having a portion of the second shell substrate 180 removed for illustrative purposes.

In an embodiment, one or more resin flow promotors may be included in the blade tip 251. More specifically, as illustrated in FIG. 15, an exterior surface 208 of the first solid core portion 254 and/or the second solid core portion 258 may include one or more chord-wise oriented grooves 210 formed therein to increase the resin flow length and promote an even flow of the resin 206 between the leading edge 130 and trailing edge 132 of the blade tip 251. The grooves 210 may further adjust the resin flow speed to account for variations in chord length. Alternatively, the flow of the resin 206 may be steered by adding resin distribution media into the layup of the first shell substrate 158 and/or the second shell substrate 180, as previously described with regard to FIG. 9.

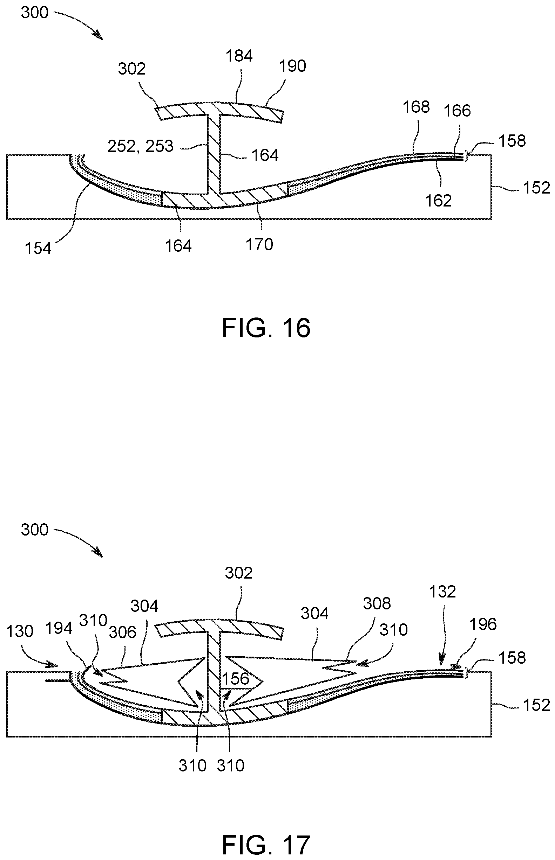

Referring now to FIGs. 16 through 21, illustrated is a third embodiment of a rotor blade mold assembly 300 and a blade tip 301, generally similar to blade tip 134 of FIG. 2, manufactured using the rotor blade mold assembly 300, in accordance with the present disclosure. Again, it is noted that like elements have like numbers throughout the disclosed embodiments. As best illustrated in FIG. 16, initially in the blade tip manufacturing process of this embodiment, a first mold 152 is provided. The first mold 152 has an inner surface 154 that has an inner contour corresponding to the exterior surfaces of the rotor blade tip 301. Thus, for example, the first mold 152 may have an inner surface 154 with an inner contour corresponding to one of the pressure side 126 or the suction side 128 (FIG. 2). In the embodiment of FIGs. 16 through 21, the first mold 152 may meet with a second mold (described presently) when assembled to further form the leading edge 130 and trailing edge 132 (FIG. 2), and the inner surface 154, may thus further correspond to the necessary portions of the leading edge 130 and trailing edge 132. Alternatively, the inner surface 154 may correspond to any suitable portions of the exterior surfaces of the rotor blade 108 to be formed. For example, similar to the previously described embodiments, the inner surface 154 may correspond to the leading edge 130 and portions of the pressure side 126 or suction side 128, and the inner surface 154 may further correspond to the trailing edge 132 and portions of the pressure side 126 or suction side 128. Still further, in alternative embodiments, more than a single mold may be utilized for the first mold 152. The inner surfaces of these molds may correspond to any suitable portions of the exterior surfaces of the rotor blade tip 301 to be formed, such that the molds when assembled together have an overall interior surface 154 with an overall contour that corresponds to the overall exterior surfaces of the rotor blade tip 301.

As previously described, the first mold 152 may extend in the span-wise direction from the tip joint 135 to the tip end 136 (FIG. 2) of the rotor blade 108 to be formed, and the interior surfaces 154 may have contours that correspond to the tip joint 135, etc., as necessary such that the complete blade tip 301 can be joined to the remaining portion of the rotor blade 108, and in particular the mid-section 144, to form the complete rotor blade 108. Alternatively, however, the molds may form only a portion of the blade tip 301 in the span-wise direction.

The layup of various materials may be provided in the mold, such as those previously described with respect to the previously disclosed embodiments, to form the rotor blade tip 301 therein. In an embodiment, this layup of materials may comprise the layup of prepreg materials. In an alternate embodiment, this layup of materials may comprise the layup of dry fiber materials, that will later undergo resin infusion. For example, a first shell substrate 158 may be provided on the inner surface 154 of the first mold 152. As previously described, the first shell substrate 158 may include one or more first outer skin layers 162, one or more first body layers 166, and one or more first inner skin layers 168. Similar to the previous embodiment, it should be understood that each of these materials may be provided as a singular component in the span-wise direction along the entire span 142 of the rotor blade tip 301, or may be provided in multiple separate components along the entire span 142 of the rotor blade tip 301, or may be provided through only a portion of the span 142 of the rotor blade tip 301. The one or more first outer skin layers 162, one or more first body layers 166, and one or more first inner skin layers 168 may be formed from any suitable material, such as those previously described.

After the first shell substrate 158 is provided on the first mold 152, one or more prefabricated structural member assemblies 302 may be provided on the first shell substrate 158, as illustrated in FIG. 16. In an alternate embodiment, at least a portion of the prefabricated structural member assemblies 302 may be formed integral with the first shell substrate 158. To form the one or more structural member assemblies 302, a plurality of structural members are provided, and more particularly, one or more first structural members 164 and a second structural member 184. In this particular embodiment, the one or more first structural members 164 may include one or more spar caps 170 and structural beams 252. Similar to the previous embodiment, the structural beams 252 may include shear webs, box beams, I-beams, or the like. In the embodiment as shown in FIGs. 16 through 21, the one or more first structural members 164 include a spar cap 170 and a shear web 253 formed as separate structural members 164 and positioned relative to one another. Alternatively, the spar cap 130 and shear web 253 may be integrally formed as previously described with regard to the embodiment of FIGs. 10-15. The second structural member 184 according to the present disclosure may include, for example, one or more spar caps 190, as discussed above with respect to the first structural members 184. In the embodiment as shown in FIG. 16, the second structural member 184 includes a spar cap 190.

As previously mentioned, it should additionally be understood that the structural members 164, 184 may extend in the span-wise direction throughout the entire span 142 of the blade tip 302, as a single unitary member, or may be provided in separate components along the entire span 142 of the blade tip 301, or may be provided in only a portion of the span 142 of the blade tip 301. The structural members 164, 184 may be formed from any suitable material, such as those previously described, which may serve to reinforce the rotor blade tip 301.

After the one or more prefabricated structural member assemblies 302 are provided relative to the first shell substrate 158, a plurality of expandable bladders 304 are disposed within an interior 156 of the first mold 152. Referring now to FIG. 17, illustrated are a first expandable bladder 306 and a second expandable bladder 308. The expandable bladders 306, 308 are positioned within the interior 156 of the first mold 152. The first expandable bladder 306 is disposed interior adjacent the leading edge 130 of the blade tip 301 and extending in a chord-wise direction to the shear web 253. The second expandable bladder 386 is disposed interior adjacent the trailing edge 132 of the blade tip 301 and extending in a chord-wise direction to the shear web 253. In an embodiment, each of the first expandable bladder 306 and a second expandable bladder 308 may be provide as a singular component in the span-wise direction along the entire span 142 (FIG. 2) of the rotor blade tip 301 or may be provided as multiple separate bladders along the entire span 142 of the rotor blade tip 301, or may be provided through only a portion of the span 142 of the rotor blade tip 301. As best illustrated in FIG. 17, each of the expandable bladders 306, 308 includes one or more overlapping or folded portions 310 providing expansion capabilities for the expandable bladders 306, 308.

Similar to the previous embodiments, in an embodiment, as best illustrated in FIG. 17, one or more bonding caps may additionally be provided. For example, as shown, a leading edge bonding caps 194 and trailing edge bonding caps 196 may be provided during the layup process.

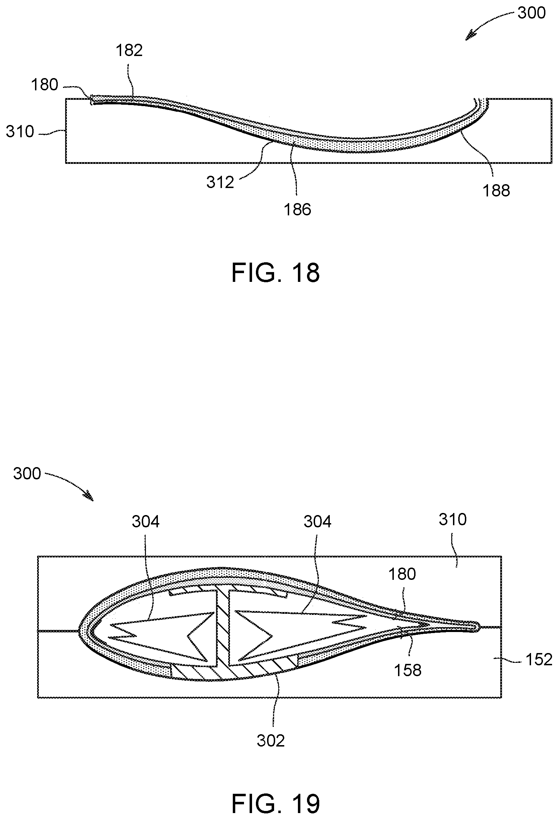

Referring now to FIG. 18, the mold assembly 300 further includes a second mold 310 having an inner contour corresponding to the exterior surfaces of the rotor blade 108. When assembled together with the first mold 152 to form a rotor blade 108, the overall mold may have an overall inner surface that has an inner contour corresponding to the exterior surfaces of the rotor blade 108. Thus, for example, the inner surface 154 of the first mold 152 may have an inner contour corresponding to one of the pressure side 126 or the suction side 128, and the second mold 310 may have an inner surface 312 with an inner contour corresponding to the other of the pressure side 126 or the suction side 128. In these embodiments, the first mold 152 and the second mold 310 may meet when assembled, and as best illustrated in FIG. 19, to further form the leading edge 130 and the trailing edge 132, and the inner surfaces 154, 312, may thus further correspond to the necessary portions of the leading edge 130 and trailing edge 132. Alternatively, the inner surfaces 154 and 312 may correspond to any suitable portions of the exterior surfaces of the rotor blade tip 301 to be formed. For example, the inner surface 154 of the first mold 152 may correspond to portions of the suction side 128, and the inner surface 312 of the second mold 310 may correspond to portions of the pressure side 126, or vice versa. Still further, in an embodiment, more than two molds 310 may be utilized. The inner surfaces 312 of these molds 310 may correspond to any suitable portions of the exterior surfaces of the rotor blade tip 301 to be formed, such that the molds 310 when assembled together have an overall interior surface 312 with an overall contour that corresponds to the overall exterior surfaces of the rotor blade tip 301.

It should additionally be understood that, in exemplary embodiments, the molds 310 may each extend in the span-wise direction from the tip end 136 to the tip joint 135 of the rotor blade tip 301 to be formed, and the interior surfaces 312 may have contours that correspond to the tip end 136 to the tip joint 135, etc., as necessary such that the entire rotor blade tip 301 may be formed as a singular component.

A second shell substrate 180 may be provided on the second mold 310, as is shown in FIG. 18. In an embodiment, the second shell substrate 180 may include one or more second inner skin layers 182, one or more second body layers 186, and one or more second outer skin layers 188, as previously described. Similar to the previous embodiments, it should be understood that each of these materials may be provide as a singular component in the span-wise direction along the entire span 142 of the rotor blade tip 301 or may be provided in multiple separate components along the entire span 142 of the rotor blade tip 301, or may be provided through only a portion of the span 142 of the rotor blade tip 301. The one or more second inner skin layers 182, one or more second body layers 186, and one or more second outer skin layers 188 may be formed from any suitable material, such as those previously described. In addition, in this particular embodiment, the second outer skin layers 188 are semi-permanently bonded to the second mold 310 to allow for inverted placement of the second mold 310 relative to the first mold 152 during blade manufacturing process. To provide such semi-permanent bonding, the one or more second outer skin layers 188 may include a bonding material on an outermost layer, such as a sprayable glue, (i.e. 3M^{™} Super 77^{™} Multipurpose Spray Adhesive), or the like.

It should be understood that the first and second shell substrates 158, 180 according to the present disclosure are not limited to the various components thereof as discussed above, and rather that any suitable first and second shell substrates 158, 180 are within the scope and spirit of the present disclosure.

Subsequent to the second shell substrate 180 being provided on the second mold 310, the mold 310 is inverted and assembled on the prefabricated structural member assembly 302, as best illustrated in FIG. 19 which is not according to the literal wording of the appended claims. The first mold 152 and the second mold 310 may generally enclose the blade tip substrates 158, 180, such that the rotor blade tip 301 (or any span-wise portion thereof) can be formed within the mold assembly 300.

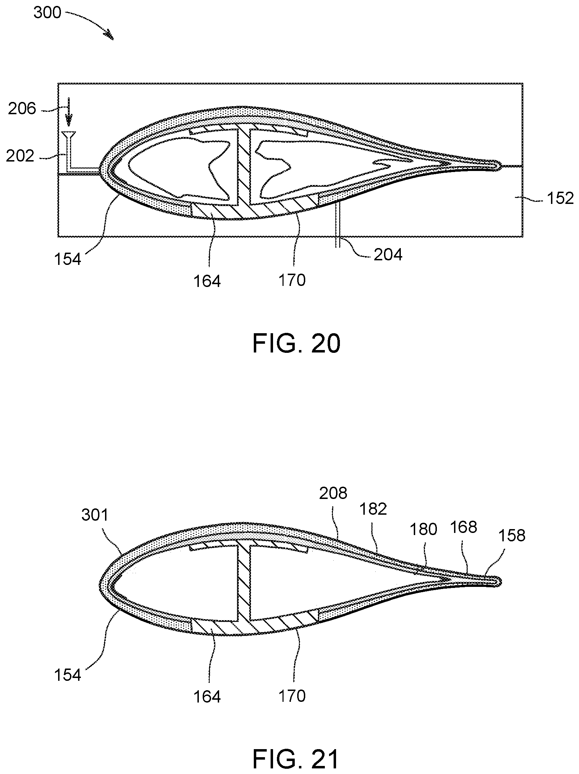

Next, as best illustrated in FIGs. 20 and 21 which are not according to the literal wording of the appended claims, a vacuum is applied to the mold assembly 300 resulting in the expansion of the bladders 308, 310. More particularly, the first expandable bladder 308 and the second expandable bladder 310 are vacuum sealed against the first shell substrate 158, the second shell substrate 180 and the one or more prefabricated structural member assemblies 302. The expanding of the first expandable bladder 308 and the second expandable bladder 310 provide structural support to the first shell substrate 158 and the second shell substrate 180during the subsequent resin infusion step.

Further, in an embodiment utilizing dry fiber materials during the layup, a plurality of inlet ports 202 and outlet ports 204 may be defined in and/or between the first mold 152 and the various mold portions, such as in and/or between the first mold 152 and the second mold 310, to allow a suitable resin to be provided between in the mold to form the rotor blade tip 301.

Similar to the previous embodiments, after enclosing the rotor blade substrates 158, 180 and other components, such as the bladders 304, between the first mold 152 and the second mold 301, and expansion of the bladders 304, a resin 206 may be flowed into the mold assembly 300 to bond with the substrates 158, 180, such as with the various components thereof, to form the rotor blade tip 301. In an exemplary embodiment, a vacuum may be applied to the mold assembly 300 before the resin 206 is flowed therein, to facilitate the flow of resin 206 and the bonding thereof with the various rotor blade tip 301 components.

After flowing of the resin 206 into the mold assembly 300, the resin 206 is allowed to cure. In an alternative embodiment, where a prepreg material is used to form the first shell substrate 158 and the second shell substrate 180, and a resin flow is not required, and the material is simply allowed to cure.

Once cured, the first mold 152, the second mold 310 and the ports 202, 204 (where included) are removed to provide the complete blade tip 301 as best illustrated in FIG. 21 which is not according to the literal wording of the appended claims. In addition, the bladders 304 may optionally be removed subsequent to resin curing. As previously described with regard to the embodiments of FIGs. 3-15, to promote an even flow of the resin 206 between the leading edge 130 and trailing edge 132 of the blade tip 301 and provide steering of the resin, resin distribution media may be incorporated into the layup of the first shell substrate 158 and/or the second shell substrate 180.

Accordingly, disclosed is a rotor blade tip mold assembly and method for forming the rotor blade tip in which provided is a commercial advantage compared to known conventional rotor blade assembly processes. Further opportunities for additional cost reduction may be found in high volume manufacturing utilizing the disclosed methods. The novel methods allow for customization of the pressure side and/or the suction side of the rotor blade. In an embodiment, the novel methods allows for a reduction in the necessary pressure side tooling (with help of the solid core), thereby reducing the mold cycle time. The novel methods and mold assemblies disclosed herein provide for the manufacture of seamless blade structures, thus mitigating leading edge erosion risk, use of less bonding paste for a more reliable process, and reduce the need to perform ultrasonic inspections of the completed parts.

This written description uses examples to disclose the disclosure, including the best mode, and also to enable any person skilled in the art to practice the disclosure, including making and using any devices or systems and performing any incorporated methods. While the disclosure has been described in terms of particular embodiments, it is apparent that other forms could be adopted by one skilled in the art. For example, it is foreseeable that functionally-equivalent devices and equipment could be used in place of the devices and equipment noted and described in reference to the disclosed embodiments. While there have been described herein what are considered to be preferred and exemplary embodiments of the present disclosure, other modifications shall be apparent to those skilled in the art from the teachings herein.

## Claims

1. A method for forming a rotor blade tip (151) of a rotor blade (108) of a wind turbine (100), the method comprising:
providing a first shell substrate (158) on a first mold (152);
providing a generally profile shaped solid core (160) on the first shell substrate (158), the generally profile shaped solid core (160) comprising a permanent portion, wherein the permanent portion is not removed upon complete formation of the blade tip (151), wherein the generally profile shaped solid core comprises a one piece solid core member (172) extending in a chord-wise direction from a leading edge (130) to a trailing edge (132) and along a chord (148) of the blade tip (151);
providing a second shell substrate (180) on the generally solid core;
providing a second mold (200) on the second shell substrate (180), wherein a stiffness of the second mold (200) is one of less than or greater than a stiffness of the first mold (152), and wherein the first mold (152) is comprised of a material having one of less than or greater Young's modulus than the materials comprising the second mold (200).

2. The method of Claim 1, wherein the first shell substrate (158) and the second shell substrate (180) each comprise of one or more prepreg material layers.

3. The method of Claim 1, wherein the first shell substrate (158) and the second shell substrate (180) are each comprised of one or more dry fiber material layers and wherein the method further comprises flowing a resin into a mold interior defined between the first mold and the second mold.

4. The method of Claim 1, wherein the step of providing the first shell substrate (158) on the first mold (152) comprises:
providing a first outer skin layer (162) on the first mold;
providing a first structural member (164) on the first outer skin layer;
providing a first body layer (166) on the first outer skin layer; and
providing a first inner skin layer (168) on the first structural member and the first body layer.

5. The method of Claim 4, wherein the first structural member (164) comprises a spar cap.

6. The method of Claim 4, wherein the step of providing the second shell substrate (180) on the generally profile shaped solid core comprises:
providing a second inner skin layer on the generally profile shaped solid core;
providing a second structural member on the second inner skin layer;
providing a second body layer on the second inner skin layer; and
providing a second outer skin layer on the second structural member and the second body layer.

7. The method of Claim 6, wherein the second structural member comprises a spar cap.

8. The method of Claim 1, wherein the second mold (200) is a caul plate comprising a flexible membrane tooling.

9. The method of Claim 1, further comprising defining one or more grooves (210) on one or more surfaces of the generally profile shaped solid core (160) for increased resin flow length.

10. The method of Claim 1, wherein the rotor blade tip (151) comprises exterior surfaces defining a pressure side, a suction side, a leading edge, and a trailing edge, wherein the first mold comprises an inner surface having an inner contour corresponding to one of the pressure side or the suction side, and wherein the second mold comprises an inner surface having an inner contour corresponding to the other of the pressure side or the suction side.

11. A rotor blade tip mold assembly (150) for forming a rotor blade tip (151) of a rotor blade (108) of a wind turbine (100), the rotor blade tip mold assembly (150) comprising:
a first shell substrate (158) on a first mold (152);
a generally profile shaped solid core (160) on the first shell substrate (158), the generally profile shaped solid core comprising a permanent solid core, wherein the generally profile shaped core comprises a one piece solid core member (172) extending in a chord-wise direction from a leading edge (130) to a trailing edge (132) and along a chord (148) of the blade tip (151);
a second shell substrate (180) on the generally solid core (160); and
a second mold (200) on the second shell substrate (180), wherein a stiffness of the second mold (200) is one of less than or greater than a stiffness of the first mold (152), wherein the first mold (152) is comprised of a material having one of less than or greater Young's modulus than the materials comprising the second mold (200).

## Patentansprüche

1. Verfahren zum Formen einer Rotorblattspitze (151) eines Rotorblatts (108) einer Windkraftanlage (100), wobei das Verfahren umfasst:
Bereitstellen eines ersten Schalen-Substrats (158) auf einer ersten Form (152);
Bereitstellen eines im Allgemeinen profilförmigen festen Kerns (160) auf dem ersten Schalen-Substrat (158), wobei der im Allgemeinen profilförmige feste Kern (160) einen permanenten Abschnitt umfasst, wobei der permanente Abschnitt nach der vollständigen Bildung der Blattspitze (151) nicht entfernt wird, wobei der im Allgemeinen profilförmige feste Kern ein einteiliges festes Kernelement (172) umfasst, das sich in einer Sehnenrichtung von einer Vorderkante (130) zu einer Hinterkante (132) und entlang einer Sehne (148) der Blattspitze (151) erstreckt;
Bereitstellen eines zweiten Schalen-Substrats (180) auf dem im Allgemeinen festen Kern;
Bereitstellen einer zweiten Form (200) auf dem zweiten Schalen-Substrat (180), wobei die Steifigkeit der zweiten Form (200) entweder kleiner oder größer als die Steifigkeit der ersten Form (152) ist und wobei die erste Form (152) aus einem Material besteht, dessen Elastizitätsmodul entweder kleiner oder größer als das der Materialien ist, aus denen die zweite Form besteht (200) aufweist.

2. Verfahren nach Anspruch 1, wobei das erste Schalen-Substrat (158) und das zweite Schalen-Substrat (180) jeweils eine oder mehrere Prepreg-Materialschichten umfassen.

3. Verfahren nach Anspruch 1, wobei das erste Schalen-Substrat (158) und das zweite Schalen-Substrat (180) jeweils aus einer oder mehreren Schichten aus trockenem Fasermaterial bestehen und wobei das Verfahren ferner das Einfließenlassen eines Harzes in einen zwischen der ersten Form und der zweiten Form definierten Forminnenraum umfasst.

4. Verfahren nach Anspruch 1, wobei der Schritt des Bereitstellens des ersten Schalen-Substrats (158) auf der ersten Form (152) umfasst:
Bereitstellen einer ersten Außenhautschicht (162) auf der ersten Form;
Bereitstellen eines ersten Strukturelements (164) auf der ersten Außenhautschicht;
Bereitstellen einer ersten Körperschicht (166) auf der ersten Außenhautschicht; und
Bereitstellen einer ersten inneren Hautschicht (168) auf dem ersten Strukturelement und der ersten Körperschicht.

5. Verfahren nach Anspruch 4, wobei das erste Strukturelement (164) eine Holmkappe umfasst.

6. Verfahren nach Anspruch 4, wobei der Schritt des Bereitstellens des zweiten Schalen-Substrats (180) auf dem im Allgemeinen profilförmigen festen Kern umfasst:
Bereitstellen einer zweiten inneren Hautschicht auf dem im Allgemeinen profilförmigen festen Kern;
Bereitstellen eines zweiten Strukturelements auf der zweiten inneren Hautschicht;
Bereitstellen einer zweiten Körperschicht auf der zweiten inneren Hautschicht; und
Bereitstellen einer zweiten Außenhautschicht auf dem zweiten Strukturelement und der zweiten Körperschicht.

7. Verfahren nach Anspruch 6, wobei das zweite Strukturelement eine Holmkappe umfasst.

8. Verfahren nach Anspruch 1, wobei die zweite Form (200) eine Caul-Platte ist, die ein flexibles Membranwerkzeug umfasst.

9. Das Verfahren nach Anspruch 1, das ferner das Definieren einer oder mehrerer Rillen (210) auf einer oder mehreren Oberflächen des im Allgemeinen profilförmigen festen Kerns (160) umfasst, um die Fließlänge des Harzes zu erhöhen.

10. Verfahren nach Anspruch 1, wobei die Rotorblattspitze (151) Außenflächen umfasst, die eine Druckseite, eine Saugseite, eine Vorderkante und eine Hinterkante definieren, wobei die erste Form eine Innenfläche mit einer Innenkontur umfasst, die der Druckseite oder der Saugseite entspricht, und wobei die zweite Form eine Innenfläche mit einer Innenkontur umfasst, die der anderen Seite, d. h. der Druckseite oder der Saugseite, entspricht.

11. Eine Rotorblattspitzenformbaugruppe (150) zum Formen einer Rotorblattspitze (151) eines Rotorblatts (108) einer Windkraftanlage (100), wobei die Rotorblattspitzenformbaugruppe (150) umfasst:
ein erstes Schalen-Substrat (158) auf einer ersten Form (152);
einen im Allgemeinen profilförmigen festen Kern (160) auf dem ersten Schalen-Substrat (158), wobei der im Allgemeinen profilförmige feste Kern einen permanenten festen Kern umfasst, wobei der im Allgemeinen profilförmige feste Kern ein einteiliges festes Kernelement (172) umfasst, das sich in einer Sehnenrichtung von einer Vorderkante (130) zu einer Hinterkante (132) und entlang einer Sehne (148) der Blattspitze erstreckt (151) erstreckt;
ein zweites Schalen-Substrat (180) auf dem im Allgemeinen festen Kern (160); und
eine zweite Form (200) auf dem zweiten Schalen-Substrat (180), wobei die Steifigkeit der zweiten Form (200) entweder kleiner oder größer als die Steifigkeit der ersten Form (152) ist, wobei die erste Form (152) aus einem Material besteht, dessen Elastizitätsmodul entweder kleiner oder größer als das der Materialien ist, aus denen die zweite Form (200) besteht.

## Revendications

1. Procédé de formation d'une extrémité de pale de rotor (151) d'une pale de rotor (108) d'une éolienne (100), le procédé comprenant :
la fourniture d'un premier substrat de coque (158) sur un premier moule (152) ;
fournir un noyau solide (160) de forme généralement profilée sur le premier substrat de coque (158), le noyau solide (160) de forme généralement profilée comprenant une partie permanente, dans lequel la partie permanente n'est pas retirée lors de la formation complète de la pointe de pale (151), dans lequel le noyau solide de forme généralement profilée comprend un élément de noyau solide en une seule pièce (172) s'étendant dans une direction cordale depuis un bord d'attaque (130) jusqu'à un bord de fuite (132) et le long d'une corde (148) de l'extrémité de pale (151);
fournir un deuxième substrat de coque (180) sur le noyau généralement solide ;
fournir un deuxième moule (200) sur le deuxième substrat de coque (180), dans lequel la rigidité du deuxième moule (200) est inférieure ou supérieure à la rigidité du premier moule (152), et dans lequel le premier moule (152) est composé d'un matériau dont le module d'Young est inférieur ou supérieur à celui des matériaux composant le deuxième moule (200).

2. Procédé selon la revendication 1, dans lequel le premier substrat de coque (158) et le deuxième substrat de coque (180) comprennent chacun une ou plusieurs couches de matériau préimprégné.

3. Procédé selon la revendication 1, dans lequel le premier substrat de coque (158) et le deuxième substrat de coque (180) sont chacun composés d'une ou plusieurs couches de matériau fibreux sec, et dans lequel le procédé comprend en outre l'écoulement d'une résine dans un intérieur de moule défini entre le premier moule et le deuxième moule.

4. Procédé selon la revendication 1, dans lequel l'étape consistant à fournir le premier substrat de coque (158) sur le premier moule (152) comprend :
la mise en place d'une première couche de peau extérieure (162) sur le premier moule ;
la mise en place d'un premier élément structurel (164) sur la première couche de revêtement extérieur ;
la mise en place d'une première couche de corps (166) sur la première couche de peau extérieure ; et
la mise en place d'une première couche de peau interne (168) sur le premier élément structurel et la première couche de corps.

5. Procédé selon la revendication 4, dans lequel le premier élément structurel (164) comprend un capot de longeron.

6. Procédé selon la revendication 4, dans lequel l'étape consistant à fournir le deuxième substrat de coque (180) sur le noyau solide généralement profilé comprend :
la fourniture d'une deuxième couche de peau intérieure sur le noyau solide généralement profilé ;
la fourniture d'un deuxième élément structurel sur la deuxième couche de revêtement interne ;
la mise en place d'une deuxième couche de corps sur la deuxième couche de peau intérieure ; et
la mise en place d'une deuxième couche de revêtement extérieur sur le deuxième élément structurel et la deuxième couche de corps.

7. Procédé selon la revendication 6, dans lequel le deuxième élément structurel comprend une semelle de longeron.

8. Procédé selon la revendication 1, dans lequel le deuxième moule (200) est une plaque de moulage comprenant un outillage à membrane flexible.

9. Procédé selon la revendication 1, comprenant en outre la définition d'une ou plusieurs rainures (210) sur une ou plusieurs surfaces du noyau solide (160) de forme généralement profilée afin d'augmenter la longueur d'écoulement de la résine.

10. Procédé selon la revendication 1, dans lequel l'extrémité de pale de rotor (151) comprend des surfaces extérieures définissant un côté pression, un côté aspiration, un bord d'attaque et un bord de fuite, dans lequel le premier moule comprend une surface intérieure ayant un contour intérieur correspondant à l'un des côtés pression ou aspiration, et dans lequel le deuxième moule comprend une surface intérieure ayant un contour intérieur correspondant à l'autre des côtés pression ou aspiration.

11. Ensemble de moules pour extrémité de pale de rotor (150) destiné à former une extrémité de pale de rotor (151) d'une pale de rotor (108) d'une éolienne (100), l'ensemble de moules pour extrémité de pale de rotor (150) comprenant :
un premier substrat de coque (158) sur un premier moule (152) ;
un noyau solide généralement profilé (160) sur le premier substrat de coque (158), le noyau solide généralement profilé comprenant un noyau solide permanent, dans lequel le noyau solide généralement profilé comprend un élément de noyau solide monobloc (172) s'étendant dans une direction cordale depuis un bord d'attaque (130) jusqu'à un bord de fuite (132) et le long d'une corde (148) de l'extrémité de pale (151) ;
un deuxième substrat de coque (180) sur le noyau généralement solide (160) ; et
un deuxième moule (200) sur le deuxième substrat de coque (180), dans lequel la rigidité du deuxième moule (200) est inférieure ou supérieure à la rigidité du premier moule (152), dans lequel le premier moule (152) est composé d'un matériau dont le module d'Young est inférieur ou supérieur à celui des matériaux composant le deuxième moule (200).
